# EUROPEAN PATENT SPECIFICATION

(11) **EP 0 358 945 B1**
(45) Date of publication and mention of the grant of the patent: **09.03.1994**
(21) Application number: 89114667.2
(22) Date of filing: 08.08.1989
(51) Int. Cl.: H02K 15/00, H02K 15/06

(54) **Method of assembling wound rotor of vertical type adjustable speed hydroelectric rotating machine at its installation site**
Verfahren zum Zusammenbau eines bewickelten Läufers einer hydroelektrischen Drehmaschine vertikaler Bauart und verstellbarer Geschwindigkeit auf seinem Installationsort
Méthode d'assemblage de rotor bobiné de machine rotative hydroélectrique du type vertical à vitesse ajustable sur son site d'installation

(30) Priority: 14.09.1988 JP 228708/88
(43) Date of publication of application: 21.03.1990
(73) Proprietor: HITACHI, LTD., Chiyoda-ku, Tokyo 101 (JP)
(72) Inventor: Hakuta, Shinsaku, Hitachi-shi Ibaraki 317 (JP); Yasaka, Yasuhiro, Hitachi-shi Ibaraki 317 (JP); Nagura, Osamu, Katsuta-shi Ibaraki 312 (JP); Tsuji, Eiji, Hitachi-shi Ibaraki 317 (JP); Suzuki, Makoto, Hitachi-shi Ibaraki 316 (JP); Akagawa, Hirotaka, Hitachi-shi Ibaraki 316 (JP)
(74) Representative: Strehl Schübel-Hopf Groening & Partner

(56) References cited:
- US-A- 2 157 046
- HYDROTECHNICAL CONSTRUCTION, vol. 16, no. 7, July 1982, U.S., pages 365-369 ; L.M. DANILOVA ; YU M. INYUSHIN : 'TECHNOLOGY OF INSTALLATION AND MAINTENANCE OF HYDROPOWER EQUIPMENT REDUCING THE COST OF THE POWERHOUSE'
- PATENT ABSTRACTS OF JAPAN, vol. 4, no. 24 (E-173) 29 February 1980 ; & JP-A-54 162 103
- PATENT ABSTRACTS OF JAPAN, vol. 10, no. 58 (E-386) (2115), 7 March 1986 ; & JP-A-60 210 153
- AEI ENGINEERING, vol. 5, no. 4, July 1965, London, GB, pages 199-201 ; E. ZAAL : 'A NEW MECHANICAL AID FOR WINDING STATORS OF LARGE TURBO-GENERATORS'

## Description

The present invention relates to a method of assembling a wound, a round or a cylindrical rotor of a vertical type adjustable speed hydroelectric rotating machine at its installation site, in that, in a power house of a hydroelectric power plant.

### Background of the Invention

In these days, hydroelectric power plants are expected to deal with peak electric loads of electric power supply networks so that the electric rotating machines in the hydroelectric power plants are required to be operated both as generator and motor depending upon load conditions, in that, as a generator-motor, and further to be speed-variable for expanding adjustable range of power generation during generator operation and for facilitating a smooth or a continuous adjustment of pumping up power during motor operation, such that the wound rotor type electric rotating machines are increasingly employed in place of conventional salient pole rotor type electric rotating machines for the hydroelectric power plants, and moreover remodeling or reconstruction of existing hydroelectric power plants by replacing the conventional salient pole rotor type electric rotating machines for the adjustable speed wound rotor type electric rotating machines is also increasingly demanded.

On the other hand, the hydroelectric power plants were and are frequently constructed among mountains, so that transportation of the constituents of large capacity hydroelectric power plants completed in factories such as water turbines and electric rotating machines coupled thereto was often impossible because of limitation of transportation, such that components of allowable size for such as the water turbines and electric rotating machines were manufactured in the factories, transported to the installation site, assembled in the power houses of the hydroelectric power plants and installed there.

An example of assembling methods of a salient pole rotor of a large capacity hydroelectric rotating machine in an installation site comprised a step of laminating steel laminations around an uprighted spider with a rotor shaft to form a laminated rotor rim, a step of clamping the laminated rotor rim between thick steel plates by reamer bolts, a step of dove-tailing magnetic poles, or pole and coil assemblies, to the thus formed rotor body and a step of connecting terminals of the respective magnetic poles.

Unlike the conventional salient pole type rotor, in the wound type rotor, a great many field coil conductor bars have to be slotted in the slots formed around the laminated rotor core and the ends thereof have to be protruded from the laminated rotor core for their connection and radial cooling ducts have to be regularly interposed in the laminated rotor core along the axial direction thereof so that the axial length of the wound type rotor of the electric rotating machine inevitably increases in comparison with that of the conventional salient pole type rotor having the same capacity and the same outer diameter and sometimes the axial length thereof reaches about 10 m.

When a new large capacity hydroelectric power plant was constructed at a location where assembling of the adjustable speed wound type rotor at the installation site was needed, the height of the power house, or more precisely, the power house superstructure, had to be increased in comparison with that for the conventional salient pole type rotor electric rotating machine, because the assembled or completed wound type rotor had once to be lifted vertically and moved by a crane to an already installed stator assembly in an installation pit of the power house for insertion thereinto. Accordingly overall construction cost of such power plant increased.

When an already existing large capacity hydroelectric power plant employing a conventional salient pole rotor type electric rotating machine was required to be remodeled, for example, by replacing the old salient pole type rotor for a new wound type rotor having the same capacity and the same diameter, remodeling or reconstruction of the existing power house, in that, an increase of its height is frequently accompanied.

When the remodeling or reconstruction of a salient pole rotor type electric rotating machine in an existing underground hydroelectric power plant was required, such remodeling was often found out to be impossible, because remodeling or reconstruction of the power house of the existing underground hydroelectric power plant was impossible.

Moreover, assembly of the wound type rotor of the electric rotating machine requires an extreme amount of manual operations for forming field coils in comparison with that of the salient pole type rotor, in that, which include inserting insulated conductor bars into rotor core slots, for example, more than 300 slots, connecting the ends of the insulated conductor bars to form field coils having a predetermined number of poles, insulating the connected portions, binding with a binding wire, for example, a steel wire with a diameter of a few mm and a few hundred km long, the coil end portions protruding from the rotor core for suppressing their bend due to the centrifugal force applied thereto during the electric rotating machine operation, and brazing the binded binding wire for integrating the turns thereof such that an enhancement of efficiency or operability and safety of the above operations are also an important problem to be considered, when assembling a wound type rotor for a electric rotating machine in its power house of a hydroelectric power plant.

### Summary of the Invention

One object of the present invention is to provide a method of assembling a wound rotor of a vertical type adjustable speed hydroelectric rotating machine in a power house of a new hydroelectric power plant which limits an increase in height of the power house and thus reduces overall construction costs of the power plant.

Another object of the present invention is to provide a method of assembling a wound rotor of a vertical type adjustable speed electric rotating machine in a power house of an already existing hydroelectric power plant which limits necessity of remodeling or reconstruction of the power house and thus reduces overall reconstruction costs of the power plant, when remodeling of the salient pole rotor type electric rotating machine in the existing hydroelectric power plant to a wound rotor type adjustable speed electric rotating machine is required.

Still another object of the present invention is to provide a method of assembling a wound rotor of a vertical type adjustable speed electric rotating machine in a power house of an already existing underground hydroelectric power plant which increases reconstructable underground hydroelectric power plants without reconstructing their power houses, when remodeling of the salient pole rotor type electric rotating machine in the existing underground hydroelectric power plant to a wound rotor type adjustable speed electric rotating machine is required. Otherwise it was impossible to remodel the salient pole rotor type electric rotating machine.

Further object of the present invention is to provide a method of assembling a wound rotor of a vertical type adjustable speed electric rotating machine in a power house of a hydroelectric power plant which reduces assembling operations of working personnels on elevated platforms and enhances efficiency and safety of the assembling operations in the power house.

One of the features of a method of assembling a wound rotor of a vertical type adjustable speed electric rotating machine in a power house of a hydroelectric power plant according to the present invention is that field coil forming operations such as the insertion of the insulated conductor bars into slots, connection of the slotted insulated conductor bar end portions, insulation treatment of the connected portions, binding of the coil end portions with bind wire and brazing the binded wire for its integrity are carried out by laying down a rotor body on its side, the rotor body including a spider with a rotor shaft, a rotor rim secured around the spider and a laminated rotor core with slots secured around the rotor rim, and by disposing the rotor body into a pit in the power house in the laid down state, but protruding the circumference of the rotor body from the pit to the extent to facilitate working personnels to carry out the field coil forming operations from the foundation of the power house so that a possible increase in height of the power house is limited to the sum of axial length of the assembled rotor and the height of a lifting jig of a crane, which is connectable to one end of the rotor shaft to lift the assembled rotor vertically and to move to an installation pit for insertion into an already assembled stator thereof.

### Brief Description of the Drawings

Figs. 1-3 show first, second and third stages of operations during assembling the wound rotor of the electric rotating machine in accordance with one embodiment of the method of the present invention, wherein the semicompleted wound rotor is illustrated partially in section;
Fig. 4 shows fourth stage of operations during assembling the wound rotor of the electric rotating machine in accordance with the one embodiment of the method of the present invention, wherein the completed wound rotor is also illustrated partially in section; and
Fig. 5 shows fifth stage of operations during assembling the wound rotor of the electric rotating machine in accordance with the one embodiment of the method of the present invention, wherein the completed wound rotor is illustrated to be lifted vertically for insertion into a stator installed in advance in an installation pit.

### Description of the Preferred Embodiment

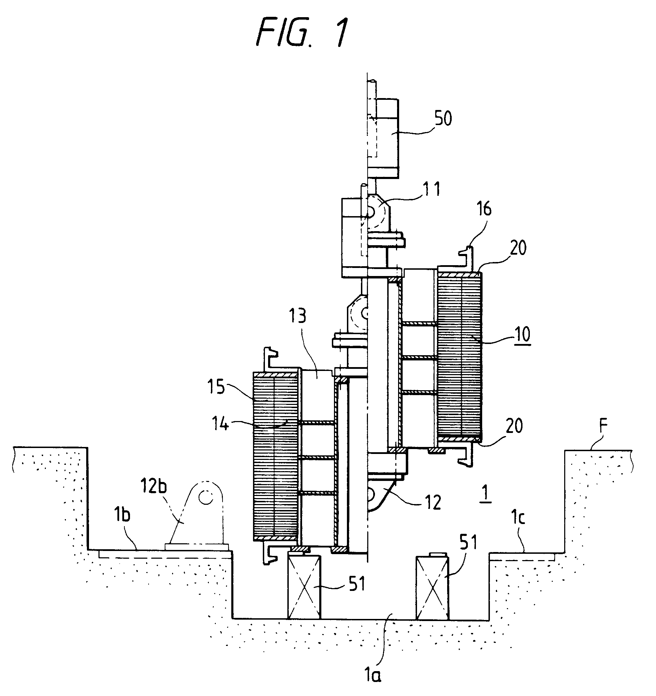

With reference to Fig. 1, the first stage of assembling operations of a wound rotor 10 of the electric rotating machine in accordance with one embodiment of the present invention is explained. At first, a spider 13 including a cylindrical rotor shaft reinforced by inwardly extending axial ribs is fabricated on a support seat 51 placed in a center portion 1a of a pit 1 provided in a power house of a hydroelectric power plant in such a manner that the axis of the cylindrical rotor shaft stands upright so as to facilitate laminating operations of steel laminations which follows the spider fabrication. To the upper end of the thus assembled spider 13, the supporting jig 11 is attached by bolting so as to enable the spider 13 to be later lifted and moved by a crane 50. Thereafter around the spider 13, steel laminations are laminated to form a rotor rim 14, and around which thin steel laminations again are laminated to form a rotor core 15 having slots more than 300 provided regularly therearound. Both rotor rim 14 and rotor core 15 are bolted together between steel end plates 20, to which end rings 16 for supporting coil ends to be mounted in the slots are secured. After assembling the rotor body explained above, to the lower end of the spider 13 is attached a movable holding jig 12 which is to be connected to a stationary holding jig 12a secured at one of the two side step portions 1b of the pit 1 for the following assembling operations.

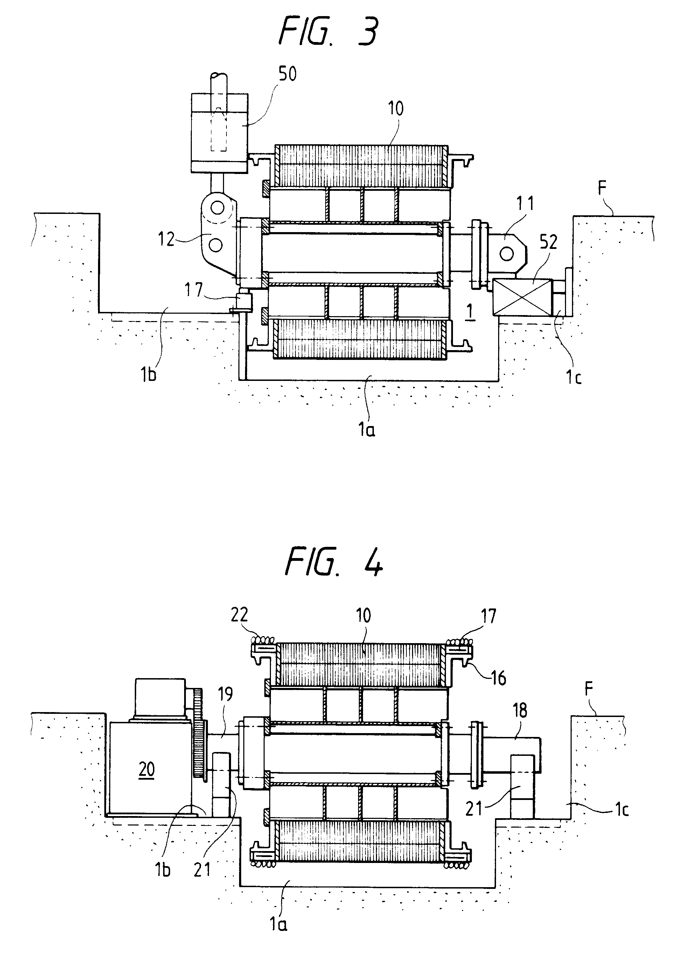

The pit 1 is composed of the center pit portion 1a and two side step portions 1b and 1c next to the center pit portion 1a. The center pit portion 1a has enough space to receive or accommodate the rotor body and has such a depth to protrude the circumference of the rotor body therefrom to facilitate the following field coil assembling operations for the working personnels from a working floor plane F, or the power house foundation, in that, to protrude to about the height of the working personnels, when rotatably and horizontally supported without touching the rotor body to the bottom thereof. The two side step portions 1b and 1c, each having a shallower depth and a space enough to receive the rotor shaft during the field coil assembling operations. The side step portion 1b has a further space for disposing a driving device 20 shown in Fig. 4 which rotates the rotor body during the assembling operations.

After the attaching operation of the movable holding jig 12 to the lower end of the rotor shaft, the semicompleted rotor body is lifted by the crane 50 as illustrated in right half of Fig. 1 for rotatably or turnably connecting the movable holding jig 12 to the stationary holding jig 12a secured on the side step portion 1b of the pit 1.

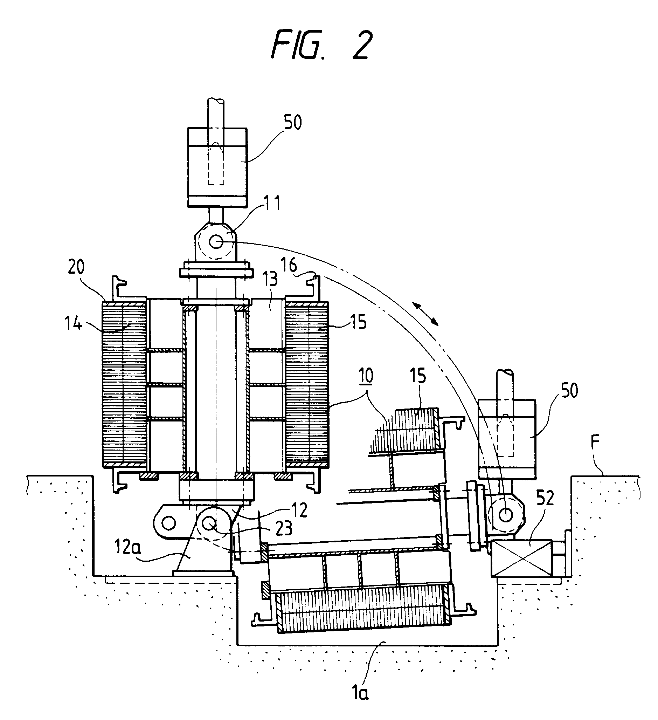

Left half of Fig. 2 shows the semicompleted rotor body 10 rotatably held through a turning device composed of the movable holding jig 12, the stationary holding jig 12a and its connecting pin 23 in upright state, wherein the rotor shaft axial direction illustrated by a broken line is slightly offset from the rotational center of the connecting pin 23 to the rotating or turning side or direction of the rotor body 10, in that, a rotational moment for the rotor body 10 exists from the beginning so that a laying down operation of the rotor body 10 with the crane 50 is smoothly carried out and the rotor body 10 finally rests on a supporting seat 52 disposed in the side step portion 1c as illustrated in the right half of Fig. 2. The position of the rotor body 10 is adjusted so that the rotor shaft is kept horizontal using the crane 50 and a hydraulic jack 17 as illustrated in Fig. 3. Thereafter as illustrated in Fig. 4, the supporting jig 11 and the holding jig 12 are disassembled and replaced with operating shafts 18 and 19, which couple with respective operating bearings 21 secured to the respective side step portions 1b and 1c of the pit 1. Moreover the end of the operating shaft 19 is mechanically coupled to the driving device 20 through, for example, gear mechanism provided thereon for step by step rotation of the rotor body 10 during the field coil assembling operations.

After the rotor finally assumes the state as explained above and illustrated in Fig. 4, the following field coil assembling operations are carried out by working personnels standing on the floor plane F while rotating step by step the horizontally supported rotor body 10 through the driving device 20. Each insulated conductor bar 17 longer than the axial length of the rotor core 15 is lifted by a crane (not shown), inserted into the corresponding slot by manual work of the working personnels and secured to the slot by, for example, driving in fixing cotters. The coil end portions of the respective conductor bars 17 are connected to form field coils having a predetermined number of magnetic poles, for example, 16 magnetic poles and the respective end connections are subject to insulation treatments by the working personnels. Since the rotor body 10 is laid down on its side in the pit 1 while protruding its circumferential top surface from the pit 1 to the height about the working personnels, these operations are carried out by the working personnels standing on the working floor F from both axial ends of the rotor body 10 while visually confirming each other, thus these operations are highly efficient and safe. When the insulated conductor bar insertion, their connection and their insulation have been finished, a steel bind wire 22 is tightly wound around the coil end portions of the insulated conductor bars 17. After securing the ends of the steel bind wire 22 wound into necessary number of turns, the steel bind wire 22 is brazed into a unitary body with placing the rotor body 10 in horizontal so that such brazing operation is substantially free from dropping of solders and brazing defects.

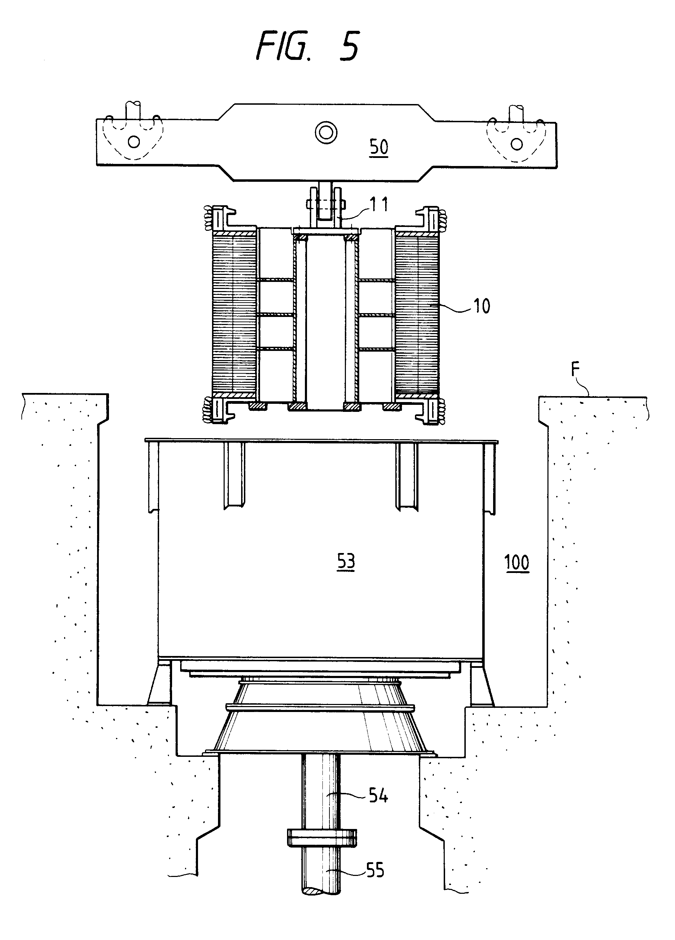

The rotor body 10 thus completed by the above described operations is illustrated in Fig. 4. After completing the rotor body 10, the driving device 20 is removed, and the operating shafts 18 and 19 and the operating bearings 21 are again replaced by the supporting jig 11 and the movable holding jig 12, and the completed rotor body 10 is supported as illustrated in Fig. 3 and again the stationary holding jig 12a is secured on the side step portion 1b to mechanically couple with the movable holding jig 12 as illustrated in right half of Fig. 2. The completed rotor body 10 is again stood upright as illustrated in left half of Fig. 2 and carried out from the pit 1 with the crane 50 for the time being. Thereafter, as illustrated in Fig. 5, thus carried out completed rotor body 10 is again lifted and moved to the installation pit 100 with the crane 50 where the water turbine and the stator of the hydroelectric rotating machine therefor have been installed in advance. The lifted completed rotor body 10 is lowered and inserted into the previously installed stator 53 and coupled to an intermediate shaft 54 which was coupled to a shaft 55 of the water turbine (not show).

As will be understood from Fig. 2, if no pit is used for assembling the wound rotor 10, an additional height amounting more than half of the rotor body diameter is needed for the power house for assembling the wound rotor therein. The diameter of a wound rotor for a large capacity hydroelectric rotating machine sometimes reaches more than 7 m.

In the above embodiment, although the pit 1 prepared in the power house other than the installation pit 100 for water turbine and its hydroelectric rotating machine is used for the wound rotor assembling operations, the installation pit 100 formed in advance may be used for the field coil assembling operations of the present invention, in such case, it is necessary to properly determined the rotor body position by selecting and combining supporting seats to be disposed in the installation pit 100.

Moreover, in the above embodiment, fabrication of the spider, the rotor rim and the rotor core are carried out in the center pit portion 1a of the pit 1, however if the height of the power house permits, such operation may be carried out on the power house foundation.

## Claims

1. A method of assembling a wound rotor of a vertical type adjustable speed electric rotating machine at a power house of a hydroelectric power plant comprising the steps of:
(a) forming a steel rotor rim (14) around an uprighted spider (13) with a rotor shaft;
(b) laminating thin steel laminations around the resultant rotor rim (14) to form a rotor core (15) with slots therearound;
(c) clamping the resultant rotor core (15) between end plates (20);
(d) securing respective end rings (16) to the respective end plates (20);
(e) laying down the resultant rotor body (10) including the spider (13), the rotor rim (14), the rotor core (15), the end plates (20) and the end rings (16), on its side;
(f) inserting insulated conductor bars (17) into the respective slots of the rotor core (15);
(g) connecting the ends of the respective insulated conductor bars (17) inserted in the slots to constitute field coils having a predetermined number of magnetic poles;
(h) binding with a bind wire (22) the end portions of the field coils supported on the respective end rings (16); and
(i) brazing into a unitary body the bound bind wire (22);
wherein said step (e) is carried out while disposing the rotor body (10) in a pit (1) formed in the power house having enough space to receive the rotor body (10) in laid-down state and protruding the circumference thereof from the power house foundation to such a height as to facilitate performing said steps (f) to (i) for working personnels from the power house foundation.

2. The method according to claim 1, wherein the pit (1) formed in the power house includes a central deep portion (1a) deep enough to receive the rotor body (10) and two shallow side portions (1b, 1c) next to the central portion (1a) and deep enough to receive the shaft of the rotor body (10).

3. The method according to claim 2, wherein said steps (a) to (d) are carried out in the central portion (1a) of the pit (1).

4. The method according to any of claims 1 to 3, wherein the pit (1) formed in the power house is an installation pit for the vertical type adjustable speed electric rotating machine.

5. The method according to any of claims 1 to 4, wherein the shift of the rotor body (10) from the upright state to the laid-down state is carried out through a turning device which comprises a supporting jig (11) attached to the upper end of the rotor body shaft and being connectable to a lifting jig of a crane (50) and a movable holding jig (12) attached to the lower end of the rotor body shaft and rotatably connected to a stationary holding jig (12a) secured in the pit (1) in such a manner that the direction of the rotor body shaft axis is slightly offset to the turning direction of the rotor body (10) from the center of rotation defined by the movable holding jig (12) and the stationary holding jig (12a).

6. The method according to any of claims 1 to 5, wherein said step (a) is carried out by laminating steel laminations around the uprighted spider (13) with the rotor shaft.

## Patentansprüche

1. Verfahren zum Montieren des gewickelten Rotors einer rotierenden elektrischen Maschine des Vertikaltyps mit verstellbarer Drehzahl im Maschinenhaus eines Wasserkraftwerks, mit den folgenden Schritten:
(a) um einen stehenden, eine Rotorwelle afweisenden Ankerstern (13) herum wird ein Stahl-Rotorkranz (14) ausgebildet;
(b) um den sich ergebenden Rotorkranz (14) herum werden dünne Stahlbleche zu einem geschlitzten Rotorkern (15) aufeinandergeschichtet;
(c) der sich ergebende Rotorkern (15) wird zwischen Stirnplatten (20) eingespannt;
(d) an den jeweiligen Stirnplatten (20) werden Stirnringe (16) befestigt;
(e) der so gebildete, den Ankerstern (13), den Rotorkranz (14), den Rotorkern (15), die Stirnplatten (20) und die Stirnringe (16) umfassende Rotorkörper (10) wird umgelegt;
(f) in die Schlitze des Rotorkerns (15) werden jeweils isolierte Leiterstäbe (17) eingefügt;
(g) die Enden der in die Schlitze eingefügten isolierten Leiterstäbe (17) werden zur Ausbildung von Feldwicklungen mit einer vorgegebenen Anzahl von Magnetpolen verbunden;
(h) die in den jeweiligen Stirnringen (16) lagernden Endabschnitte der Feldwicklungen werden mit einem Bindedraht (22) abgebunden; und
(i) der gebundene Bindedraht (22) wird zu einem einheitlichen Körper verlötet;
wobei der Schritt (e) durchgeführt wird, während der Rotorkörper (10) in einer in dem Maschinenhaus ausgebildeten Grube angeordnet ist, die genügend Platz hat, um den Rotorkörper (10) im umgelegten Zustand aufzunehmen, wobei der Umfang des Rotorkörpers aus dem Fundament des Maschinenhauses bis zu einer Höhe herausragt, die die Durchführung der Schritte (f) bis (i) durch das Arbeitspersonal vom Fundament des Maschinenhauses aus gestattet.

2. Verfahren nach Anspruch 1, wobei die in dem Maschinenhaus ausgebildete Grube (1) einen mittleren tiefen Abschnitt (1a) mit einer zur Aufnahme des Rotorkörpers (10) ausreichenden Tiefe sowie zwei an den mittleren Abschnitt (1a) anschließende flache Seitenabschnitte (1b, 1c) mit einer zur Aufnahme der Welle des Rotorkörpers (10) ausreichenden Tiefe aufweist.

3. Verfahren nach Anspruch 2, wobei die Schritte (a) bis (d) im mittleren Abschnitt (1a) der Grube (1) ausgeführt werden.

4. Verfahren nach einem der Ansprüche 1 bis 3, wobei es sich bei der in dem Maschinenhaus ausgebildeten Grube (1) um eine Installationsgrube für die umlaufende elektrische Maschine des Vertikaltyps mit variabler Drehzahl handelt.

5. Verfahren nach einem der Ansprüche 1 bis 4, wobei die Bewegung des Rotorkörpers (10) aus dem senkrechten in den umgelegten Zustand mittels einer Schwenkvorrichtung ausgeführt wird, die eine am oberen Ende der Welle des Rotorkörpers angebrachte und mit der Hubvorrichtung eines Krans (50) verbindbare Stützeinrichtung (11) und eine am unteren Ende der Welle des Rotorkörpers angebrachte und mit einer in der Grube befestigten (1) stationären Haltevorrichtung (12a) schwenkbar verbundene bewegbare Haltevorrichtung (12) aufweist, wobei die Richtung der Wellenachse des Rotorkörpers in Schwenkrichtung des Rotorkörpers (10) gegenüber dem von der bewegbaren und der stationären Haltevorrichtung (12, 12a) definierten Schwenkmittelpunkt leicht versetzt ist.

6. Verfahren nach einem der Ansprüche 1 bis 5, wobei der Schritt (a) dadurch ausgeführt wird, daß Stahlbleche um den senkrechten, die Rotorwelle aufweisenden Ankerstern (13) herum aufeinandergeschichtet werden.

## Revendications

1. Procédé d'assemblage d'un rotor bobiné d'une machine tournante électrique de type vertical et à vitesse réglable, dans une salle des machines d'une centrale hydroélectrique, comprenant les étapes consistant à :
(a) former une jante polaire en acier (14), autour d'un croisillon vertical (13) équipé d'un arbre de rotor;
(b) superposer des lamelles minces d'acier autour de la jante polaire résultante (14) pour former un noyau de rotor (15) comportant des encoches sur sa circonférence;
(c) serrer le noyau de rotor résultant (15) entre des plaques d'extrémité (20);
(d) fixer des bagues d'extrémité respectives (16) sur les plaques d'extrémité respectives (20);
(e) allonger sur son côté le corps de rotor résultant (10) comprenant le croisillon (13), la jante polaire (14), le noyau de rotor (15), les plaques d'extrémité (20) et les bagues d'extrémité (16);
(f) insérer des barres conductrices isolées (17) dans les encoches respectives du noyau de rotor (15);
(g) raccorder les extrémités des barres conductrices isolées respectives (17) insérées dans les encoches pour former des bobines inductrices possédant un nombre prédéterminé de pôles magnétiques;
(h) réunir par un fil de liaison (22) les parties d'extrémité des bobines inductrices supportées par les bagues d'extrémité respectives (16); et
(i) braser sous la forme d'un corps unitaire le fil de liaison lié (22);
ladite étape (e) étant exécutée en disposant le corps de rotor (10) dans une fosse (1) formée dans la salle des machines possédant un espace suffisant pour loger le corps de rotor (10) en position horizontale et faire ressortir sa circonférence hors de la fondation de la salle des machines à une hauteur facilitant la mise en oeuvre desdites étapes (f) à (i) pour le travail des ouvriers à partir de la fondation de la salle des machines.

2. Procédé selon la revendication 1, selon lequel la fosse (1) formée dans la salle des machines comprend une partie centrale profonde (1a), suffisamment profonde pour recevoir le corps de rotor (10), et deux parties latérales peu profondes (1b, 1c) jouxtant la partie centrale (1a) et suffisamment profondes pour recevoir l'arbre du corps de rotor (10).

3. Procédé selon la revendication 2, selon lequel lesdites étapes (a) à (d) sont exécutées dans la partie centrale (1a) de la fosse (1).

4. Procédé selon l'une quelconque des revendications 1 à 3, selon lequel la fosse (1) formée dans la salle des machines est une fosse d'installation pour la machine tournante électrique de type vertical, réglable.

5. Procédé selon l'une quelconque des revendications 1 à 4, selon lequel le déplacement du corps de rotor (10) de son état redressé dans son état allongé est exécuté au moyen d'un dispositif de pivotement qui comprend un gabarit de support (11) fixé à l'extrémité supérieure de l'arbre du corps de rotor et peut être raccordé à un gabarit de levage d'une grue (50) et un gabarit mobile de maintien (12) fixé à l'extrémité inférieure de l'arbre du corps de rotor et raccordé, de manière à pouvoir tourner, a un gabarit fixe de retenue (12a) fixé dans la fosse (1) de telle sorte que la direction de l'axe de l'arbre du corps de rotor est légèrement décalée par rapport à la direction de pivotement du corps de rotor (10) à partir du centre de rotation défini par le gabarit mobile de retenue (12) et le gabarit fixe de retenue (12a).

6. Procédé selon l'une quelconque des revendications 1 à 5, selon lequel ladite étape (a) est exécutée par superposition de lamelles d'acier autour du croisillon redressé (13) équipé de l'arbre du rotor.
